Europäisches Patentamt

European Patent Office

Office européen des brevets

(19)

(11) **EP 0 718 144 B1**

(12) **EUROPEAN PATENT SPECIFICATION**

(45) Date of publication and mention
of the grant of the patent:
**12.07.2000 Bulletin 2000/28**

(51) Int Cl.⁷: **B60N 2/00**, B60N 2/44

(21) Application number: **95118654.3**

(22) Date of filing: **27.11.1995**

(54) **Vehicle seat**

Fahrzeugsitz

Siège de véhicule

(84) Designated Contracting States:
**DE FR GB**

(30) Priority: **28.11.1994 JP 31765994**
**25.11.1994 JP 31584394**

(43) Date of publication of application:
**26.06.1996 Bulletin 1996/26**

(73) Proprietor: **YAMAHA HATSUDOKI KABUSHIKI
KAISHA
Iwata-shi Shizuoka-ken, 438 (JP)**

(72) Inventor: **Tanigaki, Satoshi,
c/o Yamaha Hatsudoki K.K.
Iwata-shi, Shizuoka-ken (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 176 147**        **WO-A-94/12080**
**DE-A- 4 100 155**        **GB-A- 2 045 072**
**US-A- 5 272 001**

**Description**

This invention relates to a vehicle seat utilizing a shock absorbing member and, in particular, to a vehicle seat having a total thickness H0, comprising a cushion and at least one shock absorbing member having a total thickness H1, wherein said thickness H0 and H1 fulfill the following relation: $0.125 \leq H1/(H0-H1) \leq 1$.

Usually, in a seat to be used, for example on a motorcycle, a cushion body made of urethane foam wrapped with seat skin made of synthetic leather is mounted on a bottom plate made of hard plate-like member, so that the vibrations generated by engine or road surface unevenness while running may be absorbed by the cushion body and may not be transmitted to occupants such as driver and passenger.

A cushion body only comprising urethane foam is not sufficient for absorbing physical shocks. Therefore, the Japanese unexamined patent publication Hei 2-2864819 proposes to use in addition a viscoelastic body within said seat in order to reduce vibrations normally applied to the driver and passenger.

However, all vehicle seats, for example for automobiles, trucks, buses, golf carts, buggy cars, snowmobiles, planing boats, aircraft, etc., require capabilities not only for reducing transmission of vibrations to the driver as far as possible but also to softening physical shocks to the driver and passenger caused by surface unevenness of the road, ground surface irregularities, snow field irregularities, waves, landing, air pockets, etc. although piles or columns of viscoelastic bodies (super absorbing elastic bodies) have so far been employed as cushion bodies for eliminating the transmission of vibrations to the driver, it is required to soften the physical shocks near the hip bone of the driver and passenger, because the physical shocks from the seat concentratedly act on the buttock portion near the hip bone of the driver.

Further, a vehicle seat comprising a chair back, it is required to soften the physical shocks near the pelvis and lumbar, because the physical shocks from behind act concentratedly on the portion of the driver near the pelvis and lumbar.

A further example for such a vehicle seat of the above kind is disclosed in the British Patent Application GB 2 045 072 A (corresponding to the preamble of claim 1.) Such a vehicle seat comprises a seat cushion and at least one shock absorbing member included in said cushion. Another example of such a vehicle seat is shown in WO-94/12080, which presents multi-layer seat material to be used in a vehicle or boat seat.

Within these seats the shock absorbing member is arranged substantially parallel to the entire area of the seating surface of the vehicle seat. This, however, raises the problem that on the one hand such a shock absorbing member is extremely costly in production if compared to the remaining material the vehicle seat is formed of, and on the other hand if the shock absorbing member intersects an upper and lower area of the seat cushion, the attachment between the upper and lower seat cushion and the shock absorbing member might become loose due to wear, so that the shock absorbing qualities of the vehicle seat will be greatly reduced after a short period, which results in reduced life time of the entire vehicle seat.

Accordingly, it is an objective of the present invention to at least partially overcome the disadvantages of the prior art by providing a vehicle seat at lower production costs than the conventional vehicle seat and at the same time increasing the life time of the vehicle seat.

For a vehicle seat as indicated above, this objective is solved according to the present invention in that:

The absorbing member is arranged at a high sitting pressure portion of the seat for supporting the hucklebones of the driver's pelvis, whereby the elasticity of the seat varies in accordance with a sitting pressure distribution.

Thus, by not arranging the absorbing member over the entire vehicle seat but only at a high sitting pressure portion of the seat, the amount of shock absorbing material used for the shock absorbing member can be greatly reduced, thereby lowering production costs. Further, since the shock absorbing member is only positioned at a high sitting pressure portion of the seat, the attachment surface of the shock absorbing member towards the cushion of the seat is reduced in total, while the contacting surface between the shock absorbing member and the cushion relative to the body of the shock absorbing member is increased. Therefore, the connection between the shock absorbing member and the cushion can be made more durably, which results in a longer life time of the vehicle seat. Since the shock absorbing member is arranged at the high sitting pressure portion of the seat where it can support the hucklebones of a driver's pelvis, the shock absorbing function of the vehicle seat is guaranteed.

According to the invention, the transmission of vibration is reduced by prescribing the relationship between the seat thickness and the shock absorbing member thickness, while the physical shock exerted on the portion of the seated driver near the hipbone is reduced.

According to one embodiment of the invention, since the shock absorbing member has recess portions formed not on a portion thereof where the sitting pressure is high but on a portion thereof where the sitting pressure is low, the hardness of the shock absorbing member can be easily adjusted with a simple structure, and the physical shock exerted on the portion of the sitting driver near the hip bone by vehicle vibrations etc., is softened while the sitting comfort is improved.

With a preferred embodiment, since a recess portion is formed in the shock absorbing member and the diameter of the recess portion is varied downward of the recess portion, the seat elasticity changes with the compression of the seat, the physical shock exerted on the portion of the sitting driver near the hip bone by the vehicle vibration, etc., is softened, while the sitting comfort is improved and in addition since a recess portion is formed in the shock absorbing member and the density or the diameter of the recess portion is varied according to, for example, the sitting pressure distribution, the displacement while sitting can be prevented, the physical shock exerted on the portion of the sitting driver near the hip bone by vehicle vibrations etc., is softened, while the sitting comfort is improved.

According to other embodiments of the invention, since the shock absorbing member has a top surface thereof formed as a convex surface as seen longitudinally of the vehicle, the feeling of fitness is improved by fitting to the saddleback convex form of the seat, or since the shock absorbing member has a top surface thereof formed as a concave surface as seen longitudinally of the vehicle, displacements transverse of the vehicle are prevented from being caused by the vehicle vibration or the like.

In addition, since the thickness of the shock absorbing member is varied longitudinally of the vehicle, the displacement longitudinal of the vehicle is prevented from being caused by the vehicle vibration or the like.

Further, since the shock absorbing member has an unevenness formed on the top portion thereof with planes inclined forward or backward of the vehicle, displacements longitudinal of the vehicle are prevented from being caused by the vehicle vibration or the like.

Alternatively, since the seat has an uneven portion provided at a portion thereof where the shock absorbing member is disposed, the deformation of the shock absorbing member is increased by the uneven portion and the transmission of vibration to the driver is reduced while the physical shock exerted on the portion of the driver near the hip bone by the vehicle vibration is softened.

In still a further embodiment of the invention, since the seat is provided with elasticity at a portion thereof where the shock absorbing member is disposed, the transmission of vibration to the driver is reduced while the physical shock exerted on the portion of the driver near the hip bone by the vehicle vibration is softened.

According to another embodiment of the invention, since the seat is fastened on the bottom plate with the shock absorbing member placed in a receiving recess portion of the seat, the shock absorbing member is pushed and expanded, and is received in the receiving recess without leaving gaps, so that the shock absorbing member is prevented from displacing.

It is still possible, since the shock absorbing member is embedded in the seat, that the shock absorbing member is hard to be affected by heat and is prevented from being spoiled by heat.

Alternatively, since the shock absorbing member is wrapped with a heat insulating member, the shock absorbing member is hard to be affected by heat and is prevented from being spoiled by heat, or since a heat insulating member is disposed on the top or bottom of the seat, the shock absorbing member is hard to be affected by heat and is prevented from being spoiled by heat.

Advantageously, since the seat is constructed by putting the shock absorbing member in the forming mold, foaming the cushion material and bonding the cushion material to the shock absorbing member, a tension is exerted on the shock absorbing member by the load exerted on the seat and the elasticity increases, so that the transmission of vibration to the driver is reduced while the physical shock exerted on the portion of the driver near the hip bone by vehicle vibration is softened.

According to preferred embodiments of the invention, since the shock absorbing member for the vehicle seat have resinous microballoons mixed in the super-soft urethane elastomer which constitutes the matrix resin thereof, the stickiness of the shock absorbing member employing super-soft urethane elastomer having a high stickiness as matrix resin becomes lower so as to be easily handled, and the shock absorbing member is easily assembled in the seat.

Preferably, since the super-soft urethane elastomer for the shock absorbing member has 1 through 5 weight percent of resinous microballoons mixed therein, the mixture of the super-soft urethane elastomer and the resinous microballoons will not separate into two layers after molding, and air ingress into the mold due to its high viscosity does not happen during molding.

Conveniently, since the ratio of the spring constant in compression to the spring constant in tension [(spring constant in compression) / (spring constant in tension)] of the shock absorbing member is not less than 1.1, and the normal storage modules thereof is not larger than 0.22 MPa (1 MPa = 1 N/mm$^2$), the weight increase when the shock absorbing member is assembled in the seat becomes smaller and the feeling of fitness while sitting is improved.

According to still another embodiment of the invention, on a vehicle seat on which a driver can be seated and having a chair back portion, since a first shock absorbing member is disposed in the seat portion thereof while a second shock absorbing member is disposed in the chair shock portion at least in a certain range vertically above the seat portion, the pelvis upper end and the lumbar of the driver are supported, the upper half of the body is stabilized, and the driver can sit comfortably while driving. Further, transmission of vibration to the driver is reduced, while the physical shocks exerted on the portion of the driver near the hip bone, pelvis and lumbar by the unevenness of the road or sudden acceleration or deceleration is softened.

Other preferred embodiments of the present invention are laid down in further dependent claims.

In the following, the present invention is explained in greater detail with respect to several embodiments thereof in conjunction with the accompanying drawings, wherein:

| | |
|---|---|
| Fig. 1 | is a side view of a motorcycle on which a driver rides. |
| Fig. 2 | is a sectional view showing an embodiment of the vehicle seat according to one embodiment of the invention. |
| Fig. 3 | is a top view of a seat shown in Fig. 2. |
| Fig. 4 | is a sectional view taken along the line IV-IV of Fig. 2. |
| Fig. 5 | is a diagram showing the sitting comfort property. |
| Fig. 6 | is a side view of a scooter type motorcycle with a driver seated thereon. |
| Fig. 7 | is a sectional view of a chair back portion of a seat. |
| Fig. 8 | is a view showing the shock absorbing member for the chair back portion. |
| Fig. 9 | is a sectional view showing an embodiment of the vehicle seat. |
| Fig. 10 | are views showing a vehicle seat according to another embodiment of this invention. |
| Fig. 11 | are views showing an embodiment of the vehicle seat. |
| Fig. 12 | is a sectional view showing an embodiment of the vehicle seat. |
| Fig. 13 | is a sectional view of an embodiment of the vehicle seat. |
| Fig. 14 | is a sectional view showing an embodiment of the vehicle seat. |
| Fig. 15 | is a sectional view showing an embodiment of the vehicle seat. |
| Fig. 16 | is a view showing an embodiment of the vehicle seat. |
| Fig. 17 | is a sectional view of the shock absorbing member portion showing an embodiment of the vehicle seat. |
| Fig. 18. | is a sectional view of the shock absorbing member portion showing an embodiment of the vehicle seat. |
| Fig. 19 | is a view showing an embodiment of the vehicle seat. |
| Fig. 20 | is a sectional view showing an embodiment of the vehicle seat. |
| Fig. 21 | is a sectional view showing an embodiment of the vehicle seat. |
| Fig. 22 | is a sectional view showing an embodiment of the vehicle seat. |
| Fig. 23 (a) & (b) | show an embodiment of the vehicle seat. |
| Fig. 24 (c) to (f) | show another embodiment of the invention with a bottom plate comprising ribs and recesses as well as a specific arrangement of shock absorbing members. |
| Fig. 25 | is a schematic view showing a device for testing a sample of shock absorbing member. |
| Fig. 26 | is a side view showing |
| | (A): a pressure jig A and |
| | (B): a pressure jig B |
| | to be used to measure the deformation of the sample on the test device shown in Fig. 25. |
| Fig. 27 | is a side view showing jigs C and D to be used to measure the spring constants of a sample in compression and in tension with a test device shown in Fig. 25 and a sample bonded between those jig. |
| Fig. 28 | is an explanatory diagram showing the relation between the content of resinous microballoons in the shock absorbing member and the loss modulus. |
| Fig. 29 | is an explanatory diagram showing the distribution of various shock absorbing member samples on the coordinates with the bench evaluation value F of feeling of fitness as the vertical axis and the spring constant ratio p as the horizontal axis. |
| Fig. 30 | is an explanatory diagram showing the distribution of various shock absorbing member samples on the coordinates with physical shock to rider's buttock as the vertical axis and normal storage modulus as the horizontal axis. |
| Fig. 31 | is a side view of a planing boat provided with a vehicle seat. |
| Fig. 32 | is a side view of a small boat provided with a vehicle seat. |
| Fig. 33 | is a side view of a golf cart provided with a vehicle seat. |
| Fig. 34 | is a side view of a snowmobile provided with a vehicle seat. |
| Fig. 35 | is a side view of an automobile provided with a vehicle seat. |

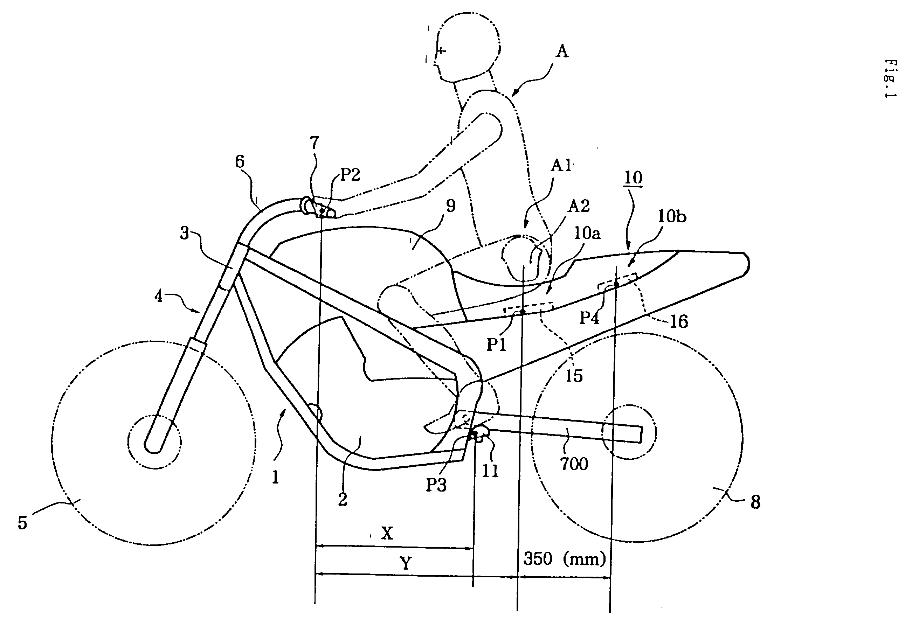

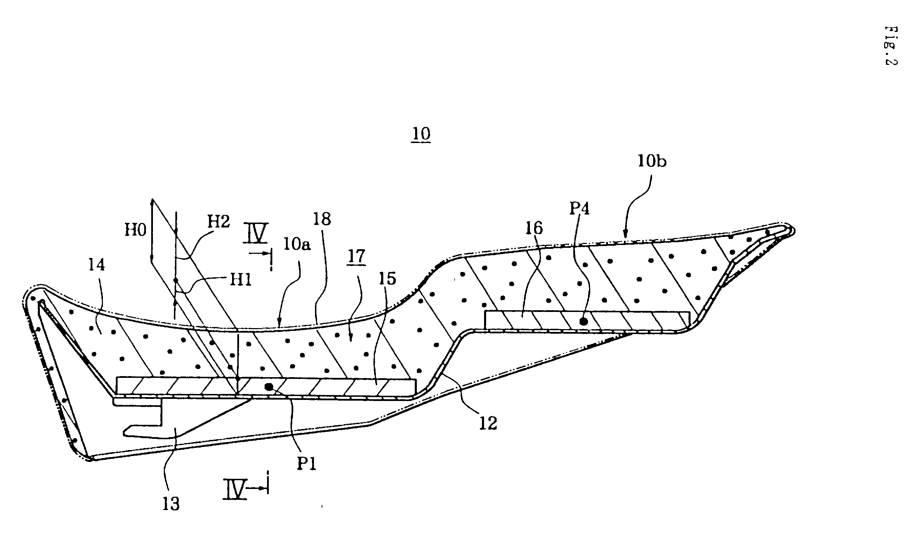

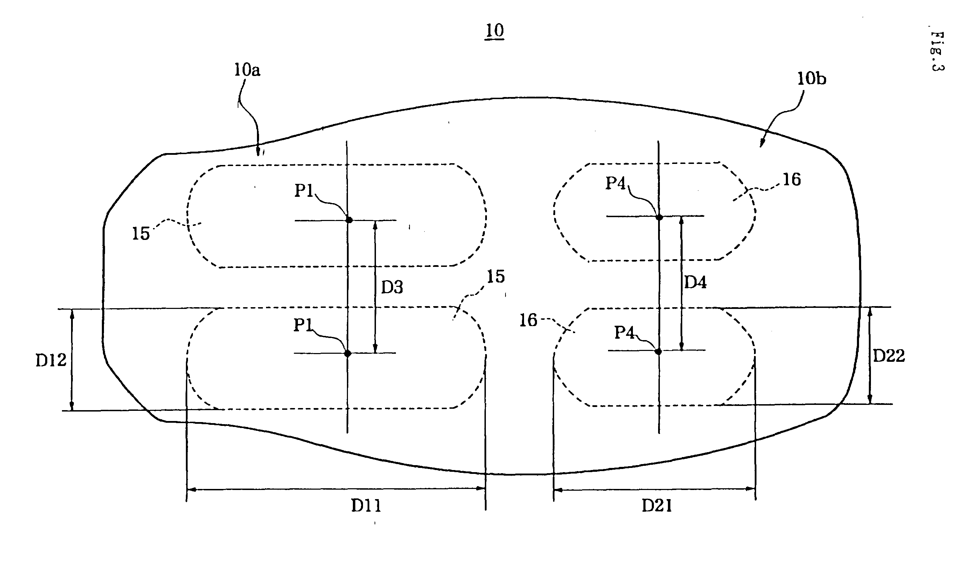

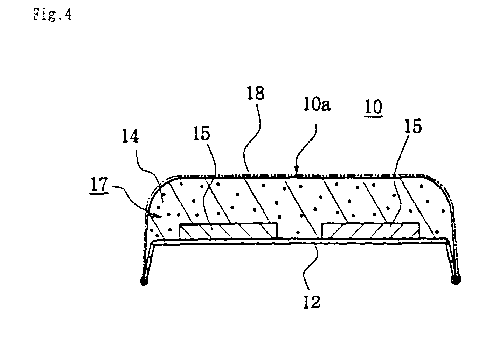

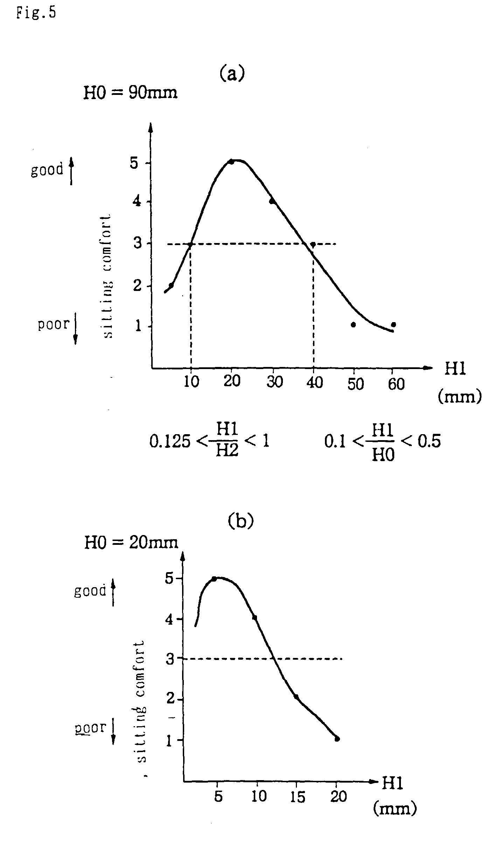

First is described the motorcycle seat as a vehicle seat according to this invention. Figs. 1 through 5 show preferred embodiments of the vehicle seat and Fig. 1 is a side view of a motorcycle in a state in which a driver sits on its seat, Fig. 2 is a sectional view of the seat, Fig. 3 is a top view of the seat, Fig. 4 is a sectional view of the seat taken along the line IV-IV of Fig. 2, and Fig. 5 is a diagram showing the sitting comfort characteristics.

On the body frame 1 of the motorcycle is mounted an engine 2 and the head pipe 3 on the front side the body frame 1 is provided with a front fork 4. The front fork 4 has a front wheel 5 and a handle 6 is installed on its lower portion and upper portion, respectively, and the handle 6 is provided with a grip 7 at each of its both ends. A rear arm 700 is connected to the rear side of the body frame 1, and a rear wheel 8 is installed on the rear portion of the rear arm 700. On the upper portion of the body frame 1 is disposed a fuel tank 9, and a seat 10 is disposed on the rear of the fuel tank 9. The seat 10 is a tandem seat formed continuously stair-like having a driver's seat 10a on which a driver sits and a co-rider's seat 10b on which a co-rider sits. The driver A sits on the sitting portion 10a of the seat 10 with his feet placed on the footrests 11 and holds the grips 7 of the handle 6 to steer the motorcycle, while the co-rider sits on the seat 10b.

The seat 10 has a bottom plate 12 made of metal, hard synthetic resin, etc., this bottom plate 12 has a mounting stay 13 installed on the bottom portion of the bottom plate 12, and the seat 10 is mounted by engaging the mounting stay 13 with the body frame 1. On the bottom plate 12 are disposed a cushion 17 composed of a cushion body 14 made of urethane foam and shock absorbing members 15 and 16 of viscoelastic body, and a synthetic leather seat skin 18 made of PVC (polyvinyl chloride) leather surface material and woolly nylon liner covers the surface of the cushion 17 and is fixed on the periphery of the bottom plate 12.

The driver's seat 10a of the seat 10 has paired left and right shock absorbing members 15 and as shown in fig. 3, their longitudinal length D11 and the lateral width D12 are taken as, for example, 240 mm and 100 mm, respectively. The co-rider's seat 10b has paired left and right shock absorbing members 16 and as shown in Fig. 3, their longitudinal length D21 and the lateral width D22 are taken as, for example, 200 mm and 100 mm, respectively, for both left and right members.

As shown in Fig. 1, the shock absorbing members 15 disposed in the driver's seat 10a of the seat 10 are positioned so that the rearward horizontal distance of the center point P1 of the shock absorbing member 15 from the grip point P2 may be within the range of $Y \pm 100$ (mm). where:

$Y = 164.1 + 0.869X$,

and

$X$ = horizontal distance (mm) between the grip point P2 and the footrest point P3.

By disposing and positioning the shock absorbing members 15 in the driver's seat 10a as described above, the transmission of the vibration to the buttock portion of the driver A is reduced, while the physical shocks exerted on the portion of the driver A near the hucklebone A2 of the pelvis A1 by the unevenness of the road or sudden acceleration or deceleration are softened.

The seat 10 has shock absorbing members 15 disposed in the driver's seat 10a on the front side and paired left and right shock absorbing members 16 disposed in the co-riders seat on the rear side and, as shown in Fig. 1, the shock absorbing members 16 are positioned so that the rearward horizontal distance of the center point P4 of the shock absorbing member 16 from the center point P1 of the shock absorbing member 15 of the driver's seat 10a may be about 350 mm.

By disposing and positioning the shock absorbing members 16 in the co-rider's seat 10b as described above, the transmission of the vibration to the buttock portion of the co-rider is reduced, while the physical shocks exerted on the portion of the co-rider near the hucklebone by the unevenness of the road or sudden acceleration or deceleration are softened.

Further, the distance D3 between the center points P1 of the left and right shock absorbing members 15 and the distance D4 between the center points P4 of the left and right shock absorbing members 16 are set within a range of about 110 ~ 140 mm, by which the physical shock exerted on the portion of the rider near the left and right hucklebones A2 of the pelvis A1 can be softened.

Further, as shown in Fig. 2, the thickness H0, H1 and H2 are so determined that following inequality relations may exist therebetween:

20 mm$<$H0$<$90 mm, 5 mm$<$H1$<$20 mm, 0.125$<$H1/H2$<$1, and 0.1$<$H1/H0$<$0.5, where:

H0 is the total thickness of the seat 10,
H1 is the thickness of the shock absorbing member 15, and
H2 = H0 - H1.

When the thickness H0 of the seat 10 is set by 20 mm$<$H0$<$90 mm and the thickness H1 of the shock absorbing member 15 is set as a 5 mm$<$H1$<$20 mm as described above, if the thickness H1 of the shock absorbing member 15 is not smaller than 10 mm then the thickness H0 of the seat 10 is 90 mm,

H1/H0 = 0.1 and H1/H2 = 0.125; and

if the thickness H1 of the shock absorbing member 15 is not larger than 10 mm when the thickness H0 of the seat 10 is 20 mm,

H1/H0 = 0.5 and H1/H2 = 1.

Fig. 5(a) is a diagram showing the sitting comfortableness properties versus the thickness H1 of the shock absorbing member 15 taking the thickness H0 of the seat 10 as 90 mm and the sitting comfortableness is best when the thickness H1 of the shock absorbing member 15 is 20 mm. It is when the thickness H1 is between 10 mm and 40 mm that the sitting comfortableness is regarded as good. Fig. 5(b) is a diagram showing the sitting comfortableness properties versus the thickness H1 of the shock absorbing member 15 taking the thickness H0 of the seat 10 as 20 mm and the sitting comfortableness is best when the thickness H1 of the shock absorbing member 15 is 5 mm.

From the descriptions above, it can be said that good sitting comfortableness can be secured when the following inequalities are satisfied:

$$0.1 < H1/H0 < 0.5 \text{ and } 0.125 < H1/H2 < 1.$$

Although the above descriptions are for the thickness of the seat 10 and the shock absorbing member 15, similar relations are established between the thickness of the seat 10 and the thickness of the shock absorbing member 16.

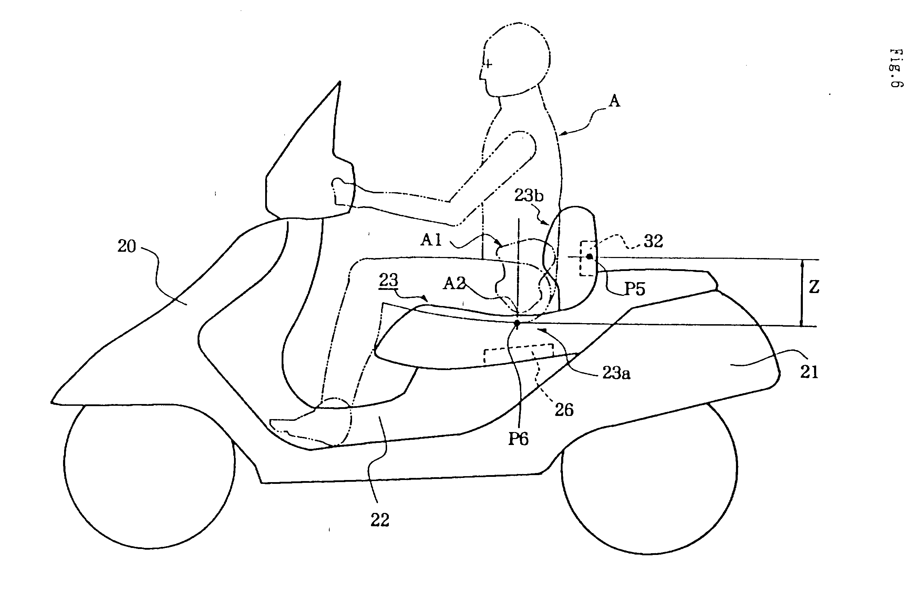

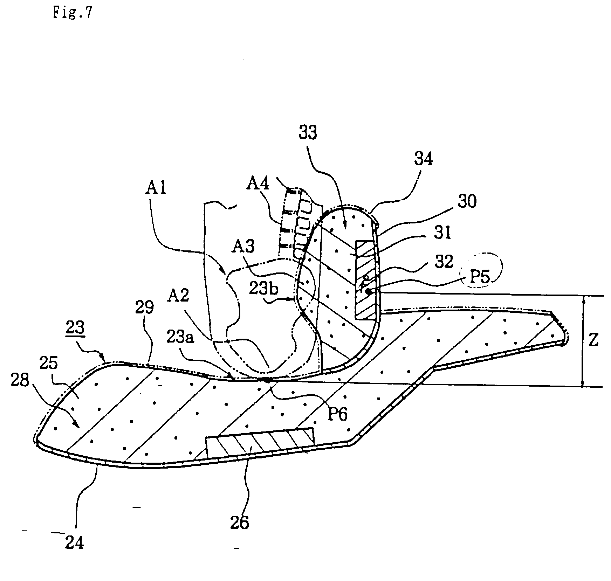

Figs. 6 through 8 show other embodiments of vehicle seats among which Fig. 6 is a side view of a scooter type motorcycle on which a driver rides, Fig. 7 is a sectional view of the chair back portion of the seat, and Fig. 8 is a sectional view showing the shock absorbing member in the chair back portion of the seat.

The scooter type motorcycle has a body frame (not shown) covered with a front cover 20, rear cover 21 and a floor cover 22. The driver A drives the scooter sitting on the seat 23 with his feet placed on the floor cover. The seat 23 is provided with a chair-back portion 23b behind the driver sitting portion 23a. The sitting portion 23a for the driver A has, placed on the bottom plate 24, a cushion 28 composed of a cushion body 25 made of urethane foam and a shock absorbing member 26 made of a viscoelastic body, and a synthetic leather seat skin 29 made of PVC (polyvinyl chloride) leather surface material and woolly nylon liner covers the surface of the cushion 28 and is fixed on the periphery of the bottom plate 24.

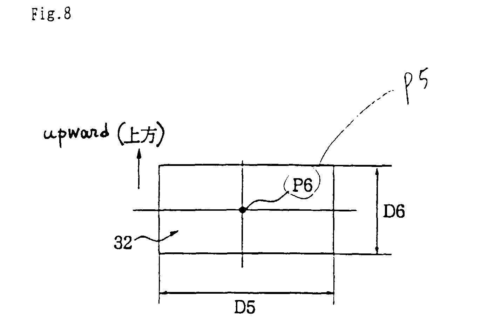

Further, the chair back portion 23b has, placed on the front side of the bottom plate 30, a cushion 33 composed of a cushion body 31 made of urethane foam and a shock absorbing member 32 made of viscoelastic body, and a synthetic leather seat skin 34 made of PVC (polyvinyl chloride) leather surface material and woolly nylon liner covers the surface of the cushion 33 and is fixed on the periphery of the bottom plate 30. As shown in Fig. 8, the lateral width D5 and the height width D6 of the shock absorbing member 32 are set to be about 250 mm and 150 mm, respectively.

The center point P5 of the shock absorbing member 32 disposed in the chair back portion 23b is set at a vertical height of about 80 ~ 180 mm above the pushing point P6 of the driver taking about 30 mm compression of the driver sitting portion 23a caused by the driver's body weight into consideration. That is, the shock absorbing member 32 is disposed at a position corresponding to the top end portion A3 of the pelvis A1 of the driver A.

By disposing shock absorbing members 26 in the driver A sitting portion 23a of the seat 23, disposing a shock absorbing member 32 in the sitting portion of the chair back portion 23b, and specifying the position of the shock absorbing member 32 in the chair back portion 23b, the portions of the driver A near the upper end A3 of the pelvis A1 and the lumbar portion A4 are supported, the upper half of the body is stabilized and the driver can be comfortable. Further, while the driver A is seated, although the physical shock from behind the seat works concentratedly on the portions near the upper end A3 of the pelvis A1 at the buttock portion and near the lumbar, the physical shock can be softened near the pelvis and lumbar by the shock absorbing member 32.

The thickness H0 of the seat 23, the thickness H1 of the shock absorbing member 26 and the thickness H2 obtained by subtracting H1 from H0 are set in the similar manner as in the embodiment above and their description is omitted. In the chair back portion 23b also, the thickness H0 of the seat 23 and the thickness H1 of the seat 23 and the thickness H1 of the shock absorbing member 32 are set similarly and their description is omitted.

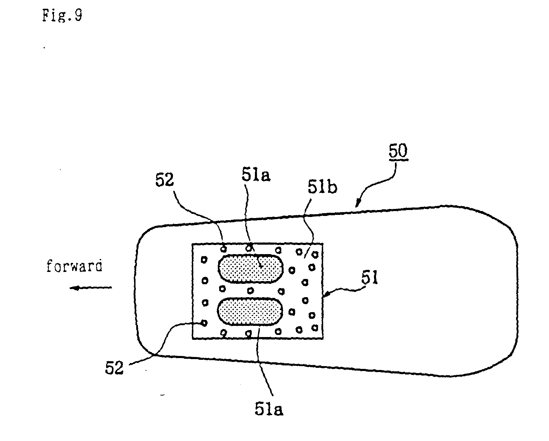

Fig. 9 shows an embodiment of a vehicle seat according to a further embodiment. In the seat of this embodiment, the recess portion 52 is not formed in the portion 51a where the sitting pressure is high, but is formed in the portion 51b where the sitting pressure is low. The shock absorbing member 51 is provided in the sitting range for the driver A, and the recess portion 52 is formed by boring holes in the shock absorbing member 51. In this embodiment, the recess portion 52 is formed to make the shock absorbing member 51 softer in the portion at the front side of the shock absorbing member 51 with which the especially sensitive thigh portion goes into contact.

By forming recess portions 52 as described above not in the portion 51a where the sitting pressure is high but in the portion 51b where the sitting pressure is low, the hardness of the shock absorbing member 51 can be adjusted with a simple structure.

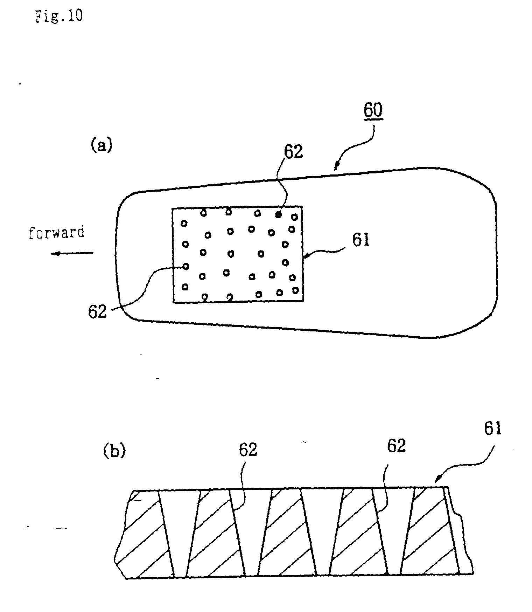

Fig. 10 shows an embodiment of a vehicle seat according to another embodiment. Fig. 10(a) is a top view of the seat and Fig. 10(b) is a sectional view of the shock absorbing member. The seat 60 of this embodiment has recess portions 62 formed through the shock absorbing member 62. The recess portions 62 are formed by boring holes in the shock absorbing member 61 and the diameter of each recess portion 62 is varied downward.

By forming recess portions 62 through the shock absorbing member 61 and varying their diameters downward as described above, the elasticity changes as the seat is compressed and the sitting comfortableness of the rider is improved.

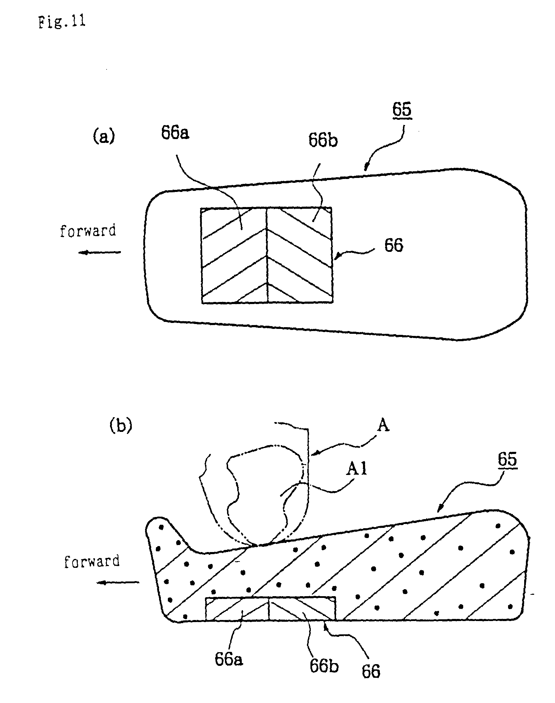

Fig. 11 shows another embodiment of a seat for the motorcycle according to another embodiment. Fig. 11 (a) is a plan view of the seat and Fig. 11 (b) is a sectional view of the seat. The seat 65 of this embodiment has a recess portion having a smaller density or diameter formed in the front portion 66a and a recess portion having a larger density or diameter in the rear portion; thus, the front portion 66a is harder and the rear portion 66b is softer. Therefore, when the driver sits on the seat, the deformation is smaller on the front side 66a and larger on the rear side 66b, and the buttock portion of the driver A is prevented from being displaced forward while sitting on the seat.

As described above, the displacement of the rider sitting on the seat is prevented and the sitting comfort is improved by varying the density or diameter of the recess portion according to, for example, the sitting pressure distribution as described above.

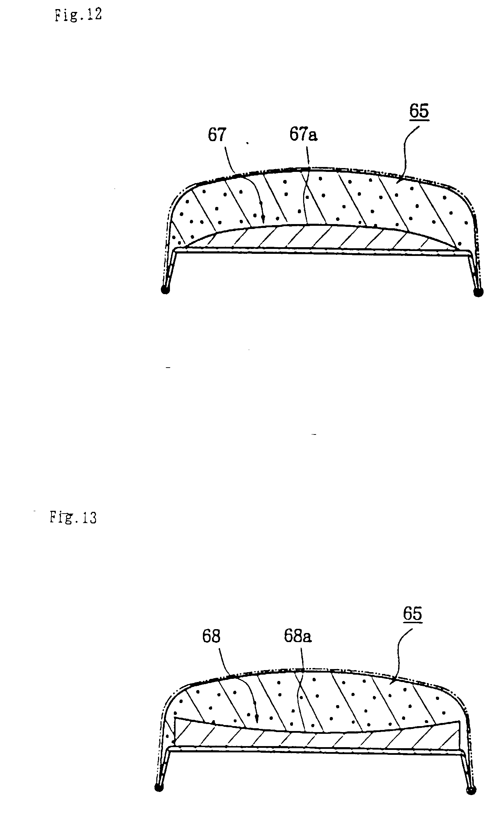

Figs. 12 through 15 show further embodiments of the vehicle seats. The embodiment shown in Fig. 12 has the top surface of the shock absorbing member 67 in the seat 65 formed as a convex surface 67a as seen longitudinally of the vehicle and the feeling of fitness is improved by fitting to the saddleback convex form of the seat.

The embodiment shown in Fig. 13 has the top surface of the shock absorbing member 69 in the seat 65 formed as a concave surface 68a as seen longitudinally of the vehicle and the lateral displacements by the vehicle vibration, road unevenness, or sudden acceleration or deceleration are prevented.

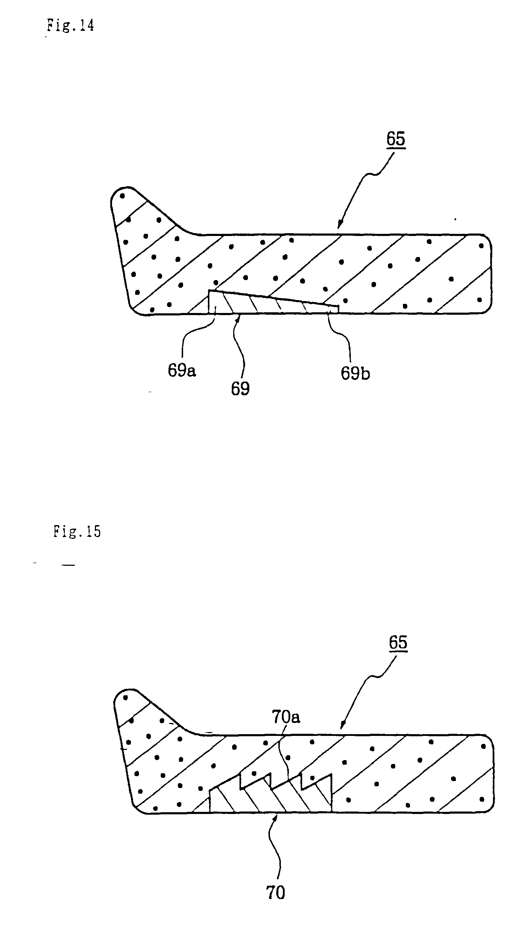

In the embodiment shown in Fig. 14, the thickness of the shock absorbing member 69 in the seat 65 is varied so as to be thicker at its front end portion 69a and thinner at its rear end portion 69b. The thickness can be varied so as to be thinner at its front end portion 69a and thicker at its rear end portion 69b. By varying the thickness of the shock absorbing member 69 longitudinally of the vehicle, the longitudinal displacements by the vehicle vibration, road unevenness or sudden acceleration or deceleration are prevented.

In the embodiment shown in Fig. 15, the shock absorbing member 70 disposed in the seat 65 has an unevenness 70a formed on the top portion thereof with planes inclined forward of the vehicle. These planes may be inclined backward. By forming such an unevenness 70a, the longitudinal displacements by the vehicle vibration, road unevenness of sudden acceleration or deceleration are prevented.

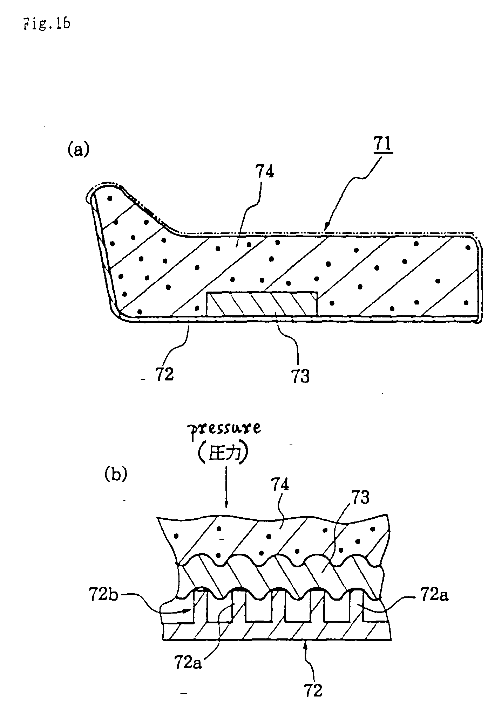

Figs. 16 through 18 show another embodiment of the vehicle seat.

In the embodiment shown in Fig. 16, although a shock absorbing member 73 is placed on the bottom plate 72 of the seat 71 and a cushion body 74 is placed on the shock absorbing member 73 as shown in Fig. 16(a), an uneven portion 72b is formed with ribs (72a) on the inside of the bottom plate 72 as shown in the enlarged view of Fig. 16(b), and the shock absorbing member 73 is disposed on this uneven portion. If, as described above, the portion of the seat 71 on which the shock absorbing member 73 is placed is provided with an uneven portion 72b, when the shock absorbing member 73 receives pressure, the shock absorbing member enters between the ribs 72a of the uneven portion 72b, by which the deflection of the shock absorbing member 73 is increased and transmission of vibration to the rider is reduced, while the physical shock exerted on the buttock portion of the rider by the road unevenness or sudden acceleration or deceleration can be softened.

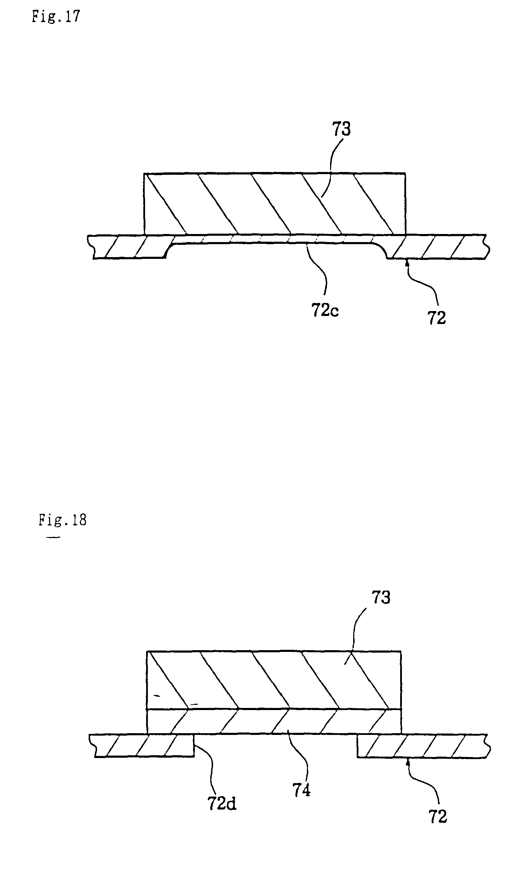

Fig. 17 is an enlarged view of the seat and in this embodiment the bottom plate 72 has a thin portion 72c formed thereon, and the shock absorbing member 73 is disposed on this thin portion 72c. By giving elasticity to the thin portion 72c on which the shock absorbing member 73 is placed as described above, transmission of vibration to the rider is reduced, while the physical shock exerted on the buttock portion of the rider by road unevenness or sudden acceleration or deceleration can be softened.

Fig. 18 is an enlarged view of a seat and in this embodiment the bottom plate 72 has an opening 72d formed therethrough and a spring member 74 covering the opening 72d from inside, and the shock absorbing member 73 is disposed on the spring member 74. By giving elasticity by the spring member 74a to the portion of the seat 71 where the shock absorbing member 73 is placed, transmission of vibration to the sitting rider is reduced, while the physical shock exerted on the buttock portion of the rider by road unevenness or sudden acceleration or deceleration can be softened.

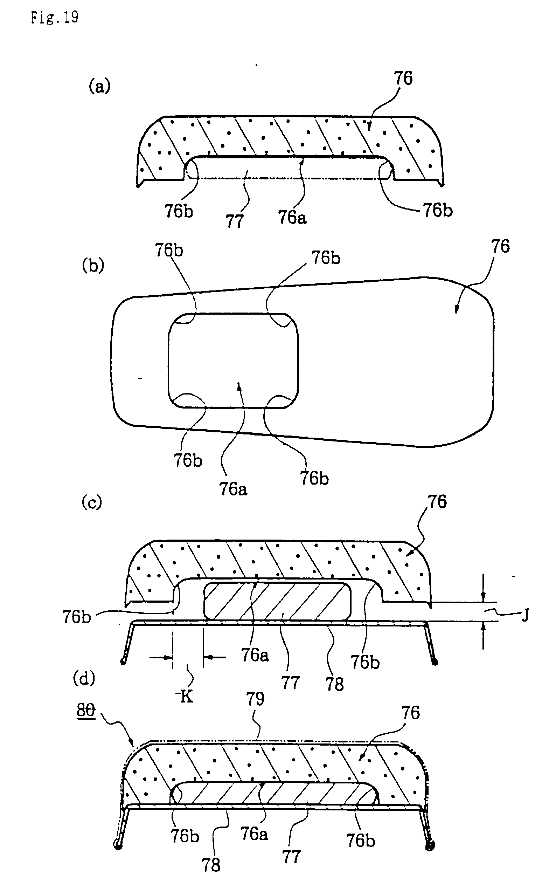

Fig. 19 shows an embodiment of a vehicle seat. Figs. 19(a) and 19(b) are a sectional view and a bottom view of a cushion body, respectively, and the cushion body 76 is provided with a receiving recess portion 76a at its portion where the shock absorbing member 77 is placed. The corner portion 76b of the receiving recess portion 76a is rounded to prevent crack. Figs. 19(c) and 19(d) show the assembled state of the shock absorbing member 77 in which a tightening allowance J is formed by making the shock absorbing member 77 thicker than the receiving recess 76a of the cushion body 76 while forming a gap K as a relief portion by making the periphery of the shock absorbing member 77 smaller than the receiving recess 76a. The seat 80 is constructed by pressing and fastening the shock absorbing member 77 with the cushion body 76 and the bottom plate 78, covering the cushion body 76 with a seat skin 79 and fixing the seat skin around the bottom plate 78.

When the cushion body 76 is fastened on the bottom plate 78 with the shock absorbing member 77 placed in the receiving portion 76a, the shock absorbing member 77 is pushed and expanded and is received in the receiving recess 76a without gap and the displacement of the shock absorbing member 77 is prevented.

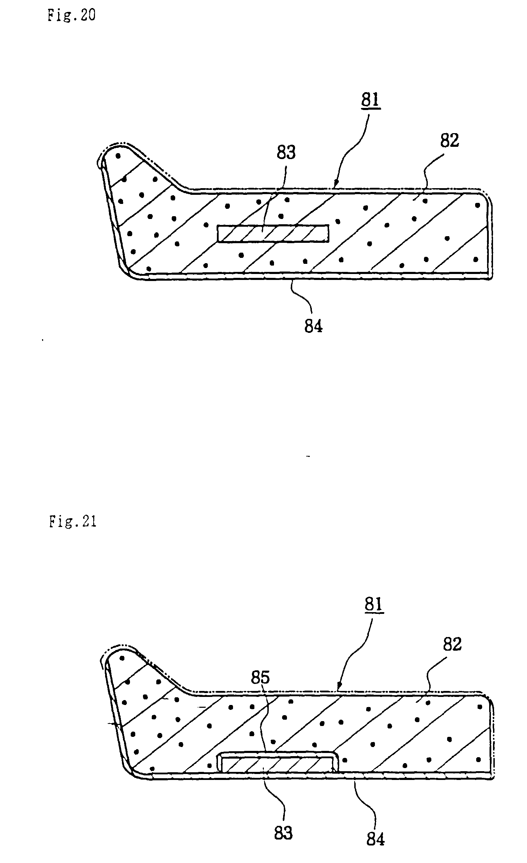

Figs. 20 through 23 show vehicle seats according to other embodiments.

The seat 81 of the embodiment shown in Fig. 20 has a shock absorbing member 83 embedded in the middle portion of the cushion body 82. By embedding the shock absorbing member 83 as shown, the shock absorbing member 83 becomes hard to be affected by solar heat and engine heat, or by low temperature in winter, and the performance of the shock absorbing member 83 is prevented from being spoiled by the thermal effect.

The seat 81 of the embodiment shown in Fig. 21 has a shock absorbing member 83 disposed inside the bottom plate 84 and wrapped with a heat insulating member 85. By thus wrapping the shock absorbing member 83 with the heat insulating member 85, the shock absorbing member 83 becomes hard to be affected by solar heat and engine heat, or by low temperature in winter, and the performance of the shock absorbing member 83 is prevented from being spoiled by the thermal effect.

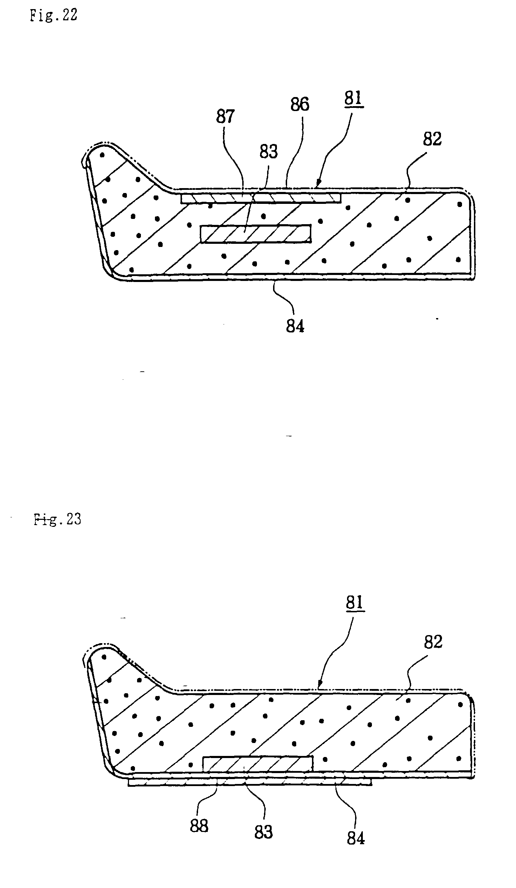

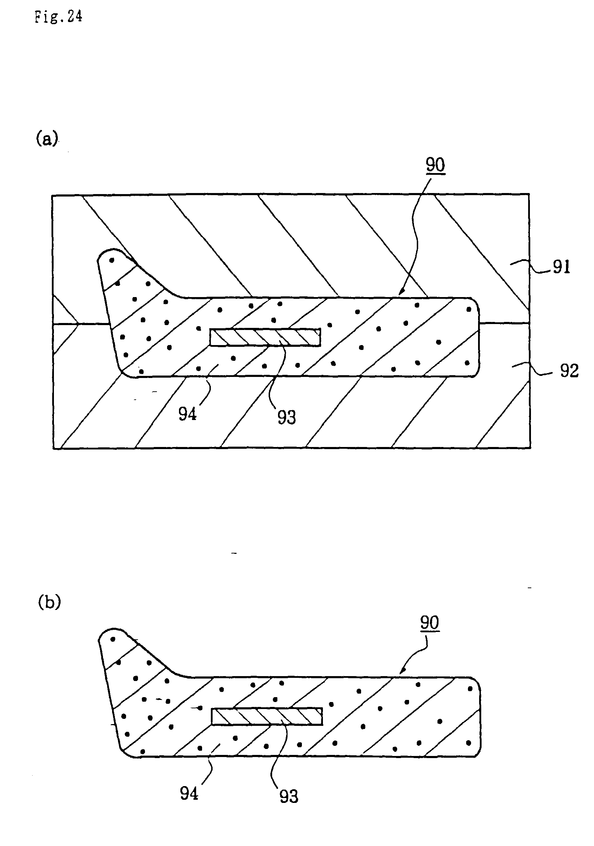

The seat 81 of the embodiment shown in Fig. 22 has a heat insulator 87 inserted under the seat skin 86 and disposed in the upper portion of the seat 81, and the seat 81 of the embodiment shown in Fig. 23 has a heat insulator 88 disposed on the bottom of the seat 81 under the bottom plate 84. By disposing a heat insulator on the top portion or bottom portion of the seat 81 as described above, the shock absorbing member 83 becomes hard to be affected by solar heat and engine heat, or by temperature in winter, and the performance of the shock absorbing member 83 is prevented from being spoiled by the thermal effect.

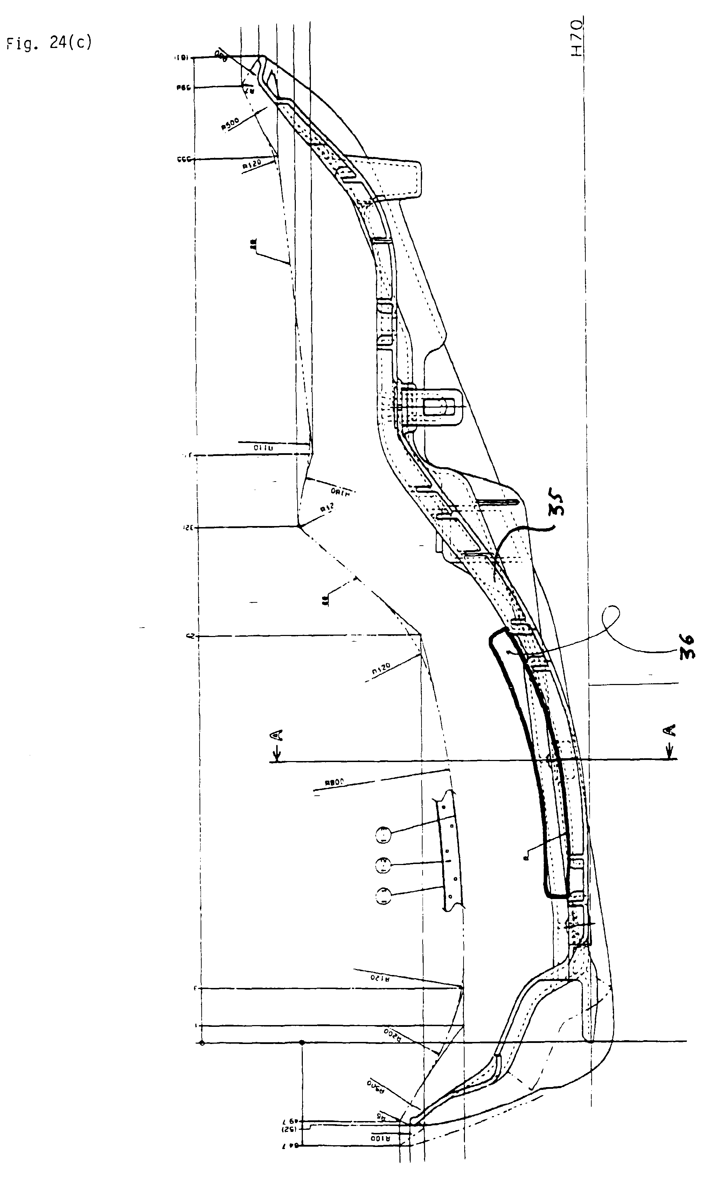

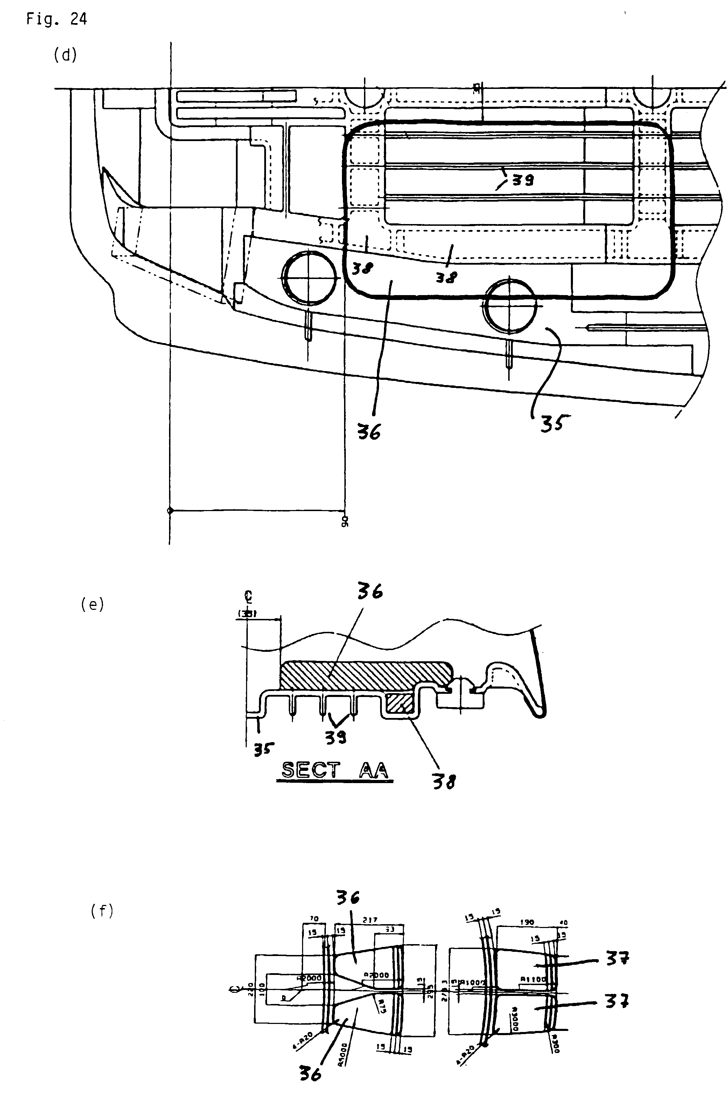

Fig. 24 shows a further embodiment of a vehicle seat. Fig. 24(a) is a sectional view showing the state of the seat while being manufactured, and Fig. 24(b) is a sectional view of the manufactured seat. As shown in Fig. 24(a), the seat 90 is manufactured by foaming the cushion material 94 with the shock absorbing member 93 held within the forming molds 91 and 92 and bonding the cushion material 94 and the shock absorbing member 93 to each other.

Since the seat 90 is manufactured by foaming the cushion material 94 with the shock absorbing member 93 held within the forming molds 91 and 92 and bonding the cushion material 94 and the shock absorbing member 93 to each other as described above, and as shown in Fig. 24(b), a tension works on the shock absorbing member 93 by the load exerted on the seat 90 and the elasticity increases, transmission of vibration to the sitting rider is reduced, while the physical shock exerted on the buttock portion of the rider by road unevenness or sudden acceleration or deceleration can be softened.

Fig. 24(c) shows a sectional view of a motor cycle tandem seat similar to Fig. 2, whereby the driver's part of a bottom plate 35 is acuted to the passenger's seat. A shock absorbing member 36 is disposed on the front seat side of said bottom plate 35 and, although not shown in Fig 24(c), a shock absorbing member 37 is disposed on the rear side of this tandem seat.

Fig 24 (d) shows a bottom view of this bottom plate 35 with the arrangement of said shock absorbing member 36.

As can be seen in Fig. 24(e), which is a partial sectional view taken along the lines A-A of Fig. 24(c), the bottom plate 35 comprises several ribs 39 which are longitudinally arranged and extend to the outside of this seat. This ribbed portion is surrounded by several recesses 38 which open to the interior of this seat and may contain shock absorbing material, cushion material which may be harder than the remaining cushion body, or receive parts of this shock absorbing member 36. These ribs 39 reinforce the structure of this bottom plate 35. The ribbed portion together with the surrounding recesses cover an area essentially corresponding to said shock absorbing member 36.

Fig. 24(f) shows a preferred arrangement of front and rear shock absorbing members 36 and 37 for a tandem seat. Especially, there are illustrated advantageous shapes as well as dimensions of this embodiment.

The shock absorbing member to be used for the vehicle seat according to this invention is viscoelastic body using super-soft urethane elastomer as matrix resin and having 1 ~ 5 weight percent of resinous microballoons mixed therein.

The super-soft urethane elastomer to be used as matrix resin for the shock absorbing member is, for example, a mixture of polyether polyol, polyester polyol, triaryl isocyanate, MDI (diphenyl methane diisocyanate)/TDI (tolylene diisocyanate) pre-polymer, Sn catalyst, and phthalic acid plasticizer, etc., new urethane resin disclosed in Japanese Patent Publication Hei 3-17848 (applicant: IIDA SANGYO K.K.), super-soft elastomer composition disclosed in the Japanese Unexamined Patent Publication Hei 3-37217 (applicant: Nippon Automation, et at.), or the like. These are urethane elastomers having a hardness of 15 or lower as measured by the Ascar C durometer manufactured by Kobunsi Keiki K.K. for measuring the hardness of soft materials.

The resinous microballoons mixed in matrix resin in the sock absorbing member is such that butane gas is filled in the shells (average grain size of 40 to 60 μ, grain diameter ranging 10 to 100 μ) of vinylidenechloride resin (vinylidenechloride acrylonitrile copolymer), and has been generally in the market for years under the trade name of Expancell DE (made by Expancell AB., Sweden) as a filler of low density.

Whereupon, when resinous microballoons (in this embodiment: Expancell DE (Trade name) manufactured by Expancell AB. in Sweden) is mixed in super-soft urethane elastomer (in this embodiment: Orotex U1003 (trade name) manufactured by IIDA SANGYO K.K.), if the mixing ratio (weight percent) of the resinous microballoons to the urethane elastomer is less than 1 %, the mixture will separate into two layers after molding and curing, and if the mixing ratio is more than 5%, the mixture will allow entry of air during molding due to its high viscosity after mixing.

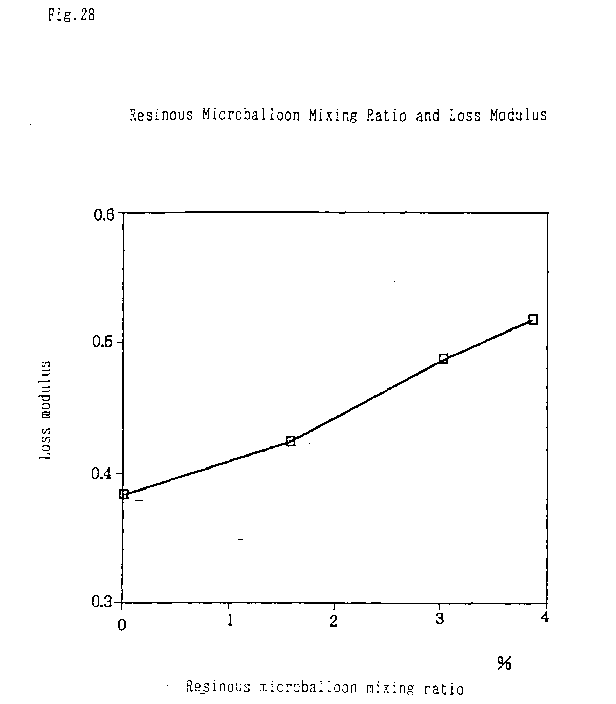

The shock absorbing member composed of super-soft urethane elastomer mixed with resinous microballoons as described above shows an adhesive property lower than super-soft urethane elastomer itself and has a loss modulus which rises with the increase of the mixture ratio of resinous microballoons as shown in Fig. 28. It is light in weight (specific gravity = 0.62), has a small impact resilience factor (8%), shows small change in hardness with the change of temperature and provides good feeling of fitness to the seat as compared to other conventional visco-elastic shock absorbing members used for motorcycle seats.

For the feeling of fitness with regard to the shock absorbing member, no other test than the sensory evaluation by the rider's feeling has been made and objective numerical evaluation has been considered to be difficult. However, the invention of this invention believed that a good feeling of fitness would be provided if the seat receives the rider's buttocks as a whole firmly without large deformation and comes into contact mildly with his hucklebone protruding in his riding posture. On the basis of this concept, the following tests were made to measure the feeling of fitness.

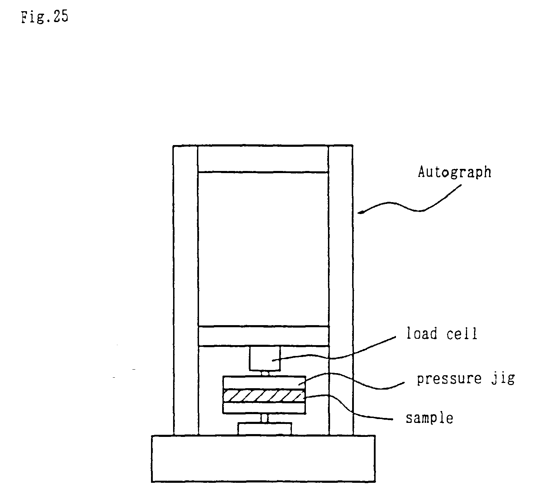

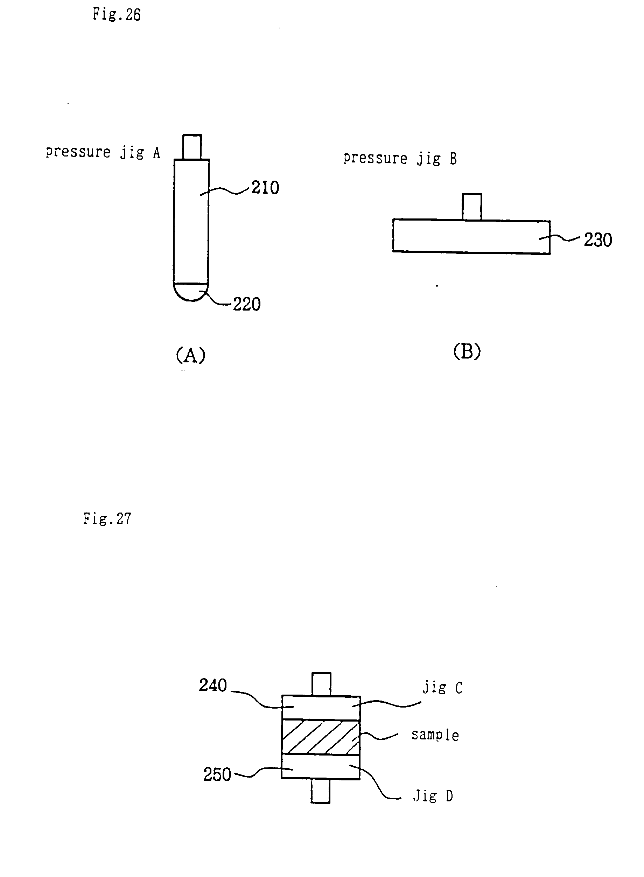

Using, as a test device, AGS 500A Autograph (tension/compression tester) made by SHIMAZU CORP., shown in Fig. 25, each of the test samples of 100 mm diameter and 20 mm thickness is fixed to the Autograph by a pressure jig A with a cylindrical portion 210 of 30 mm diameter and a semispherical tip 220 as shown in Fig. 26(A) and a pressure jig B with a disk portion 230 of 100 mm diameter as a pushing surface as shown in Fig. 26(B), and then:

(1) each sample is loaded by the pressure jig A and the load (value X) is measured when deformation of the sample becomes 5 mm,
(2) the sample is loaded by the pressure jig B, and the load (value Y) is measured when deformation of the sample becomes 5 mm, and
(3) the bench evaluation test value of the feeling of fitness for the seat is calculated as $F = Y/X$.

Similarly, using AGS 500A Autograph (tension/compression tester) made by SHIMAZU CORP., shown in Fig. 25, as a test device, each of the test samples of 30 mm diameter and 20 mm thickness is placed to be bonded between jigs C and D having respective disk portions 240 and 250 of 30 mm diameter and is set to the Autograph. Then:

(1) each sample is measured of its spring constant (X1) when compressed by 2 mm,
(2) the sample is measured of its spring constant (X2) when stretched by 2 mm, and
(3) the ratio p of the spring constant is compression to that in tension is calculated as $p = X1/X2$.

The results of the bench evaluation value F of the feeling of fitness and the spring constant ratio p measured by the tests described above and the normal storage modulus measured by a separate test according to JIS K6394 are shown in Table 1 below.

Samples are as follows:

A:    Embodiment of this invention (Orotex(trade name) mixed with Expancell DE (trade name) by 3.0% (weight percent),
B:    Conventional urethane foam,
C:    Urethane foam with low resilience factor (Durene 1),
D:    Urethane foam with low resilience factor (Durene 2),
E:    Urethane foam with low resilience factor (Durene 3),
F:    Shock absorbing urethane foam (Poron),
G:    Shock absorbing urethane foam (Orotex U 1003)
H:    Shock absorbing urethane foam (Solbosane).

[Table 1]

| Sample | p value | F value | normal storage modulus (MPa)* |
|--------|---------|---------|-------------------------------|
| A | 1.30 | 57.3 | 0.102 |
| B | 0.66 | 15.7 | 0.0361 |
| C | 1.21 | 19.8 | 0.593 |
| D | 1.21 | 22.8 | 0.224 |
| E | 1.11 | 23.1 | 0.0577 |
| F | 0.964 | 16.2 | |
| G | 1.18 | 43.1 | 0.150 |
| H | 1.29 | 67.4 | 0.378 |

*: The normal storage modulus is measured according to JIS K6394 for samples of 100 mm diameter and 20 mm thickness.
<Test condition>
Average strain : 10%
Strain amplitude : 1%
Note: 1 MPa (Mega Pascal) in the table is equal to 1 N/mm$^2$ (0.0101972 kp/mm$^2$)

Further, the sensory evaluation values of the seats using, as shock absorbing member, the same materials as these samples are shown in Table 2 below:

[Table 2]

| sample | feeling of fitness in sensory evaluation (sitting comfort)* | physical shock to rider's buttocks in sensory evaluation (riding test)* |
|--------|-----------------------------------------------------------|------------------------------------------------------------------------|
| A | 5 | 3 |
| B | 1 | 5 |
| C | | 1 |
| E | 3 | |
| G | 4 | 3 |
| H | 5 | 2 |

 * 1: very poor, 2: poor, 3: fair, 4: good, 5: very good

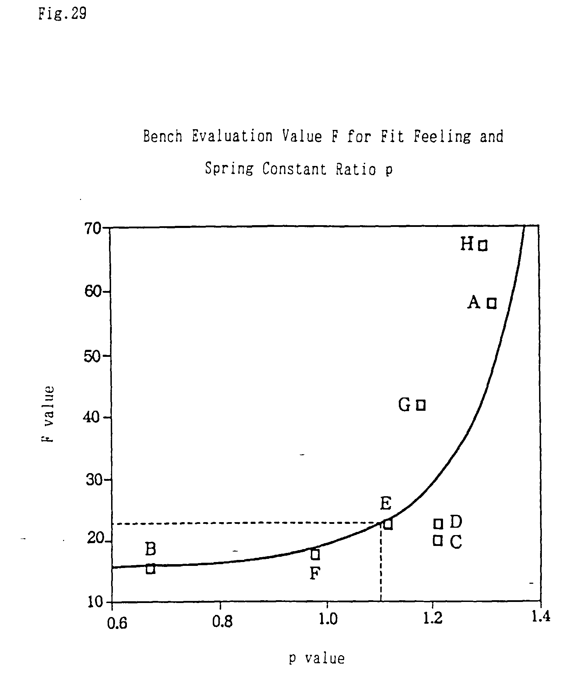

Fig. 29 shows the distribution of the test results for samples presented in Table 1 on the coordinates with bench evaluation value F of feeling of fitness as the vertical axis and spring constant ratio p as the horizontal axis. Examining Fig. 29 and Table 2 above together, it can be stated that the material whose spring constant ratio p (that in compression / that in tension) is more than equal to 1.1 will provide a good feeling of fitness to the seat.

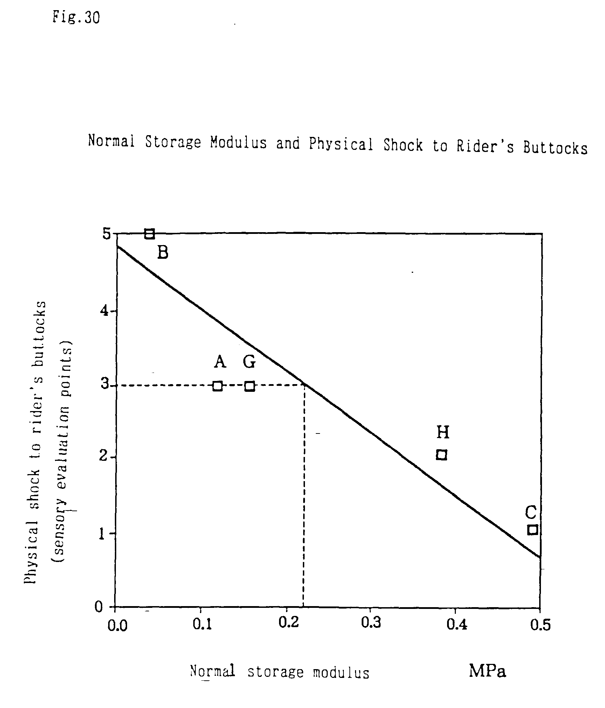

Fig. 30 shows the relation between normal storage modulus in Table 1 and physical shock to the rider's buttocks in Table 2. From Fig. 30, it can be stated that the normal storage modulus below 0.22 MPa will give little physical shock to the rider's buttocks.

That is, from these test results described above, it is found even from numerical values that the shock absorbing member of this embodiment measured as sample A, which has a p value of 1.30 and normal storage modulus of 1.102 MPa, will provide a good feeling of fitness to the seat with a less physical shock to the rider's buttocks.

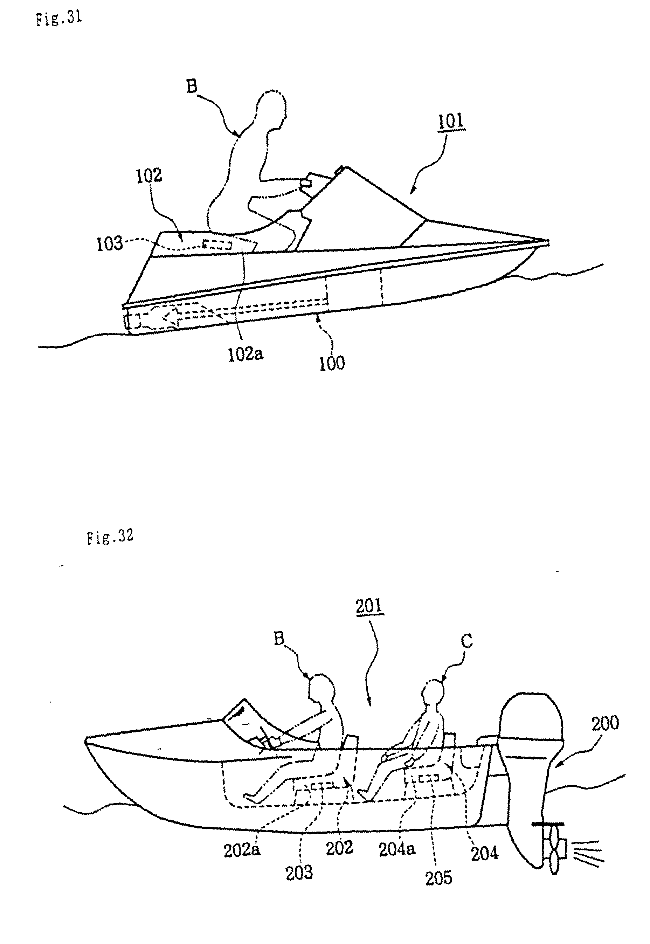

The vehicle seat according to this invention can be utilized not only for motorcycles as described above, but also for such vehicles as shown in Figs. 31 through 35. On the planing boat 101 equipped with a jet propulsion unit 100 as shown in Fig. 31, the seat 102 on which the driver B can be seated has a shock absorbing member 103 disposed in the sitting portion for the driver B to soften the physical shock exerted on the portion of the driver B near the hucklebone by waves or sudden acceleration or deceleration.

On a small boat 201 equipped with an outboard motor 200 as shown in Fig. 32, the seat 202a on which the driver B can be seated has a shock absorbing member 203 disposed therein and, similarly, the seat 204 on which the co-rider C can be seated has a shock absorbing member 205 disposed in the sitting portion 204a for the co-rider C to soften the physical shock exerted on the portion of the driver B near the hucklebone by waves or sudden acceleration or deceleration.

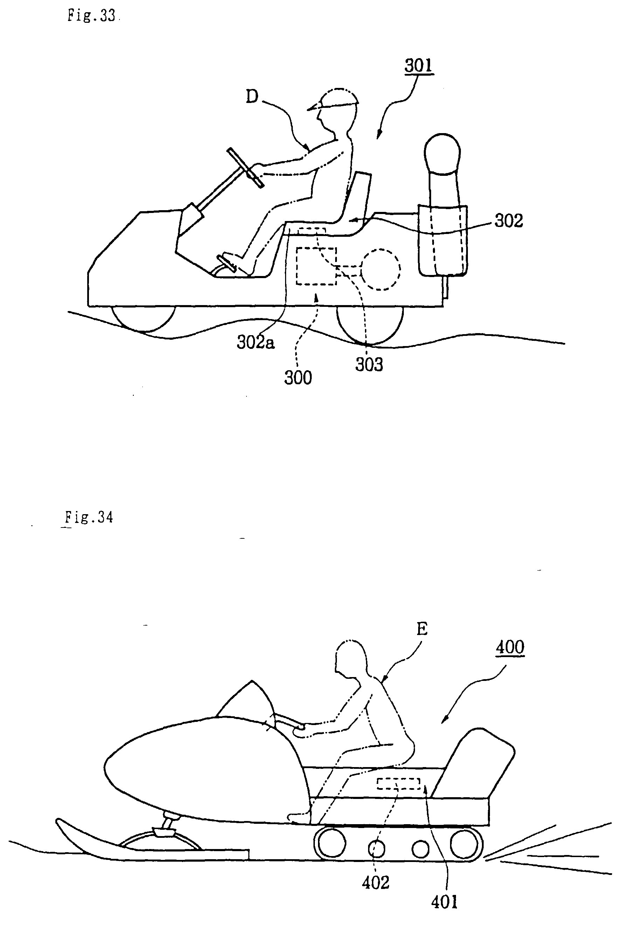

On a golf cart 301 equipped with an engine 300 as shown in Fig. 33, the seat 302 on which the driver D can be seated has a shock absorbing member 303 disposed in the sitting portion 302a for the driver D to soften the physical shock exerted on the portion of the driver D near the hucklebone by the unevenness of the ground.

On a snowmobile 400 shown in Fig. 34, the seat 401 on which the driver E can be seated has a shock absorbing member 402 disposed in the sitting portion 401 a for the driver E to soften the physical shock exerted on the portion of the driver E near the hucklebone by the unevenness of the snow field.

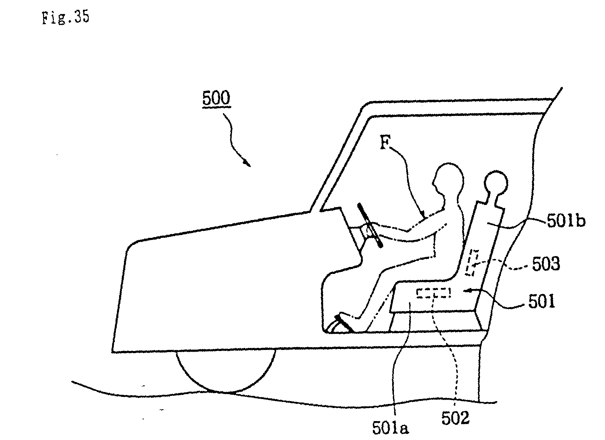

On an automobile 500 shown in Fig. 35, the seat 501 on which the driver F can be seated has shock absorbing members 502 and 503 disposed in the sitting portion 501a and chair back portion 501 b, respectively, to soften the physical shock exerted on the portions of the driver near the hucklebone, pelvis and lumbar.

Further, the vehicle seat according to this invention can be similarly utilized for trucks, buses, aircraft.

According to claim 1 of this invention, as described above, since the relations between the thickness of the seat and the thickness of the shock absorbing member are prescribed, transmission of vibration to the seated rider can be reduced while the physical shock exerted on the rider's portion near the hucklebone can be softened.

## Claims

1. A vehicle seat (10) having a total thickness H0, comprising a cushion (14) and at least one shock absorbing member (15,16) having a total thickness H1, wherein said thickness H0 and H1 fulfill the following inequality relation:

$$0.125 \leq H1/(H0-H1) \leq 1,$$

   **characterized in that**
   the absorbing member (15,16) is arranged at a high sitting pressure portion of the seat for supporting the hucklebones (A2) of a driver's pelvis (A1), whereby the elasticity of the seat varies in accordance with a sitting pressure distribution.

2. A vehicle seat (10) according to claim 1, **characterized in that** two shock absorbing members (15, 16) are longitudinally arranged.

3. A vehicle seat (10) according to claim 1 or 2,
   **characterized in that** said shock absorbing member (51) comprises recess portions (52) arranged at areas where the sitting load of an occupant (A) is low.

4. A vehicle seat (10) according to claim 1 or 2,
   **characterized in that** said shock absorbing member (61) comprises recess portions (62) the density or diameter of which are varying in location.

5. A vehicle seat (10) according to at least one of the preceding claims 1 to 3, **characterized in that** said shock absorbing member (69) have a convex, concave, longitudinally inclined or unevenly-shaped with inclined portions upper surfaces, respectively.

6. A vehicle seat according to at least one of the preceding claims 1 to 3, **characterized by** an uneven portion (72b) or elastic portion (72c, 74a) adjacent said shock absorbing member (73).

7. A vehicle seat (10) according to at least one of the preceding claims 1 to 3, **characterized by** a receiving recess portion (76a) for said shock absorbing member (77) within said cushion body (76) being shaped such that said shock absorbing member (77) is received under stress.

8. A vehicle seat (10) according to at least one of the preceding claims 1 to 7, **characterized in that** a heat insulating member (85, 87, 88) is disposed at the top or bottom side of said seat (81) or wrapped around said shock absorbing member (83), respectively.

9. A vehicle seat (10) according to at least one of the preceding claims 1 to 8, **characterized in that** said shock absorbing member (93) is bonded to said cushion body (94) by foaming said cushion body (94) around said shock absorbing member (93).

10. A vehicle seat (10) according to at least one of the preceding claims 1 to 9, **characterized in that** said shock absorbing member comprises resinous microballoons mixed in the urethane elastomer which constitutes the matrix resin thereof.

**11.** A vehicle seat (10) according to claim 10, **characterized in that** said urethane elastomer is a super-soft urethane elastomer comprises resinous microballoons in an amount of 1 to 5 weight percent.

**12.** A vehicle seat (10) according to claim 10 or 11, **characterized in that** the ratio of the spring constant in compression to the spring constant in tension of said shock absorbing member is not smaller than 1.1 and that the normal storage modulus thereof is not larger than 0.22 N/mm$^2$.

**13.** A vehicle seat (10) according to at least one of the preceding claims 1 to 12, **characterized b**y a chair back portion (23b) comprising a shock absorbing member (32).

**14.** A vehicle seat (10) according to at least one of the preceding claims 1 to 13, **characterized by** a bottom plate (24) comprising longitudinally extending ribs protruding to the outside surrounded by recesses open to the inside both disposed in an area adjacent to said shock absorbing member.

**Patentansprüche**

**1.** Ein Fahrzeugsitz (10), der eine totale Stärke von H0 aufweist, mit einer Dämpfereinrichtung (14) und zumindest einem Stoßdämpferelement (15, 16) mit einer totalen Stärke von H1, wobei diese Stärken H0 und H1 die folgende Ungleichung erfüllen:

$$0{,}125 \leq H1/(H0\text{-}H1) \leq 1,$$

**dadurch gekennzeichnet**, dass
das Stoßdämpferelement (15, 16) an einem Abschnitt mit hohem Sitzdruck des Sitzes angeordnet ist zur Unterstützung der Hüftknochen (A2) des Beckens (A1) eines Fahrers, wobei die Elastizität des Sitzes in Abhängigkeit von der Verteilung des Sitzdruckes variiert.

**2.** Ein Fahrzeugsitz (10) nach Anspruch 1, **dadurch gekennzeichnet**, dass zwei Stoßdämpferelemente (15, 16) in longitudinaler Richtung angeordnet sind.

**3.** Ein Fahrzeugsitz (10) nach Anspruch 1 oder 2, **dadurch gekennzeichnet**, dass dieses Stoßdämpferelement (51) Aussparungsabschnitte (52) aufweist, die angeordnet sind in Bereichen, in denen die Sitzlast des Fahrers (1) gering ist.

**4.** Ein Fahrzeugsitz (10) nach Anspruch 1 oder 2, **dadurch gekennzeichnet**, dass dieses Stoßdämpferelement (61) Aussparungsabschnitte (62) aufweist, deren Dichte oder Durchmesser örtlich variieren.

**5.** Ein Fahrzeugsitz (10) nach zumindest einem der vorstehenden Ansprüche 1 bis 3, **dadurch gekennzeichnet**, dass dieses Stoßdämpferelement (69) konvexe, konkave, longitudinal geneigt oder uneben geformte, mit geneigten Abschnitten ausge stattete obere Oberflächen entsprechend aufweist.

**6.** Ein Fahrzeugsitz (10) nach zumindest einem der vorstehenden Ansprüche 1 bis 3, **gekennzeichnet durch** einen unebenen Abschnitt (72b) oder einen elastischen Abschnitt (72c, 74a), und zwar angrenzend an diesem Stoßdämpferelement (73).

**7.** Ein Fahrzeugsitz (10) nach zumindest einem der vorstehenden Ansprüche 1 bis 3, **gekennzeichnet durch** einen eine Aussparung aufnehmenden Abschnitt (76a) für dieses Stoßdämpferelement (77) innerhalb des Dämpfereinrichtungskörpers (76), der so ausgeformt ist, daß die Stoßdämpfereinrichtung (77) unter Spannung aufgenommen ist.

**8.** Ein Fahrzeugsitz (10) nach zumindest einem der vorstehenden Ansprüche 1 bis 7, **dadurch gekennzeichnet**, dass ein wärmeisolierendes Element (85, 87, 88) auf der oberen oder auf der unteren Seite des Sitzes (81) angeordnet bzw. um dieses Stoßdämpferelement (83) gewunden ist.

**9.** Ein Fahrzeugsitz (10) nach zumindest einem der vorstehenden Ansprüche 1 bis 8, **dadurch gekennzeichnet**, dass dieses Stoßdämpferelement (93) mit diesem Dämpfereinrichtungskörper (94) verbunden ist, indem dieser Dämpfereinrichtungskörper (94) um dieses Stoßdämpferelement (93) umschäumt ist.

**10.** Ein Fahrzeugsitz (10) nach zumindest einem der vorstehenden Ansprüche 1 bis 9, **dadurch gekennzeichnet**, dass dieses Stoßdämpferelement harzhaltige Mikro-ballons aufweist, die in dem Urethanelastomer eingemischt sind, welches die Harzmatrix davon bildet.

**11.** Ein Fahrzeugsitz (10) nach Anspruch 10, **dadurch gekennzeichnet**, dass das Urethanelastomer ein superweiches Urethanelastomer ist mit harzhaltigem Mikro-ballons in einer Menge von 1 bis 5 Gew.%.

**12.** Ein Fahrzeugsitz (10) nach Anspruch 10 oder 11, **dadurch gekennzeichnet**, dass das Verhältnis der Federkonstante bei einer Kompression zu der Federkonstante bei einem Zug von diesem Stoßdämpferelement nicht geringer als 1,1 ist und daß der normale Speichermodul davon nicht größer als 0,22 $N/mm^2$ ist.

**13.** Ein Fahrzeugsitz (10) nach zumindest einem der vorstehenden Ansprüche 1 bis 12, **gekennzeichnet durch** einen Sitzrückenabschnitt (23b), der ein Stoßdämpferelement (32) enthält.

**14.** Ein Fahrzeugsitz (10) nach zumindest einem der vorstehenden Ansprüche 1 bis 13, **gekennzeichnet durch** eine Bodenplatte (24), die sich longitudinal erstreckende Rippen aufweist, die zu der Außenseite hervorragen, welche von Aussparungen umgeben sind, die nach innen offen sind, und wobei beides in einem Bereich angeordnet ist, der an dem Stoßdämpferelement angrenzt.

**Revendications**

**1.** Siège de véhicule (10) ayant une épaisseur totale H0, comprenant un coussin (14) et au moins un élément amortisseur de chocs (15, 16) ayant une épaisseur totale H1, dans lequel lesdites épaisseurs H0 et H1 répondent à la relation d'inégalité suivante :

$$0,125 \leq H1 / (H0 - H1) \leq 1$$

caractérisé en ce que
l'élément amortisseur de chocs (15, 16) est aménagé sur une partie de pression d'assise élevée du siège afin de supporter les os des hanches (A2) et du bassin (A1) d'un conducteur, ce qui permet une variation de l'élasticité du siège en fonction de la répartition de la pression d'assise.

**2.** Siège de véhicule (10) selon la revendication 1, caractérisé en ce que deux éléments amortisseurs de chocs (15, 16) sont aménagés de manière longitudinale.

**3.** Siège de véhicule (10) selon la revendication 1 ou 2, caractérisé en ce que ledit élément amortisseur de chocs (51) comprend des parties en retrait (52) aménagées dans des zones où la charge d'assise de l'occupant (A) est faible.

**4.** Siège de véhicule (10) selon la revendication 1 ou 2, caractérisé en ce que ledit élément amortisseur de chocs (61) comprend des parties en retrait (62) dont la densité ou le diamètre varient en fonction de leur emplacement.

**5.** Siège de véhicule (10) selon au moins l'une des revendications précédentes 1 à 3, caractérisé en ce que ledit élément amortisseur de chocs (69) comporte respectivement des surfaces supérieures convexes, concaves, inclinées longitudinalement ou de forme irrégulière avec des parties inclinées.

**6.** Siège de véhicule (10) selon au moins l'une des revendications précédentes 1 à 3, caractérisé par une partie irrégulière (72b) ou une partie élastique (72c, 74a) située à proximité dudit élément amortisseur de chocs (73).

**7.** Siège de véhicule (10) selon au moins l'une des revendications précédentes 1 à 3, caractérisé par une partie de réception en retrait (76a) destinée au dit élément amortisseur de chocs (77) aménagée à l'intérieur dudit corps de coussin (76) dont la forme est telle que ledit élément amortisseur de chocs (77) y est reçu par contrainte.

8. Siège de véhicule (10) selon au moins l'une des revendications précédentes 1 à 7, caractérisé en ce qu'un élément de calorifugeage (85, 87, 88) est disposé respectivement du côté du sommet ou du côté de l'embase dudit siège (81) ou enroulé autour dudit élément amortisseur de chocs (83).

9. Siège de véhicule (10) selon au moins l'une des revendications précédentes 1 à 8, caractérisé en ce que ledit élément amortisseur de chocs (93) adhère au dit corps de coussin (94) par formage de la mousse dudit corps de coussin (94) autour dudit élément amortisseur de chocs (93).

10. Siège de véhicule (10) selon au moins l'une des revendications précédentes 1 à 9, caractérisé en ce que ledit élément amortisseur de chocs se compose de microbilles de résine mélangées à un élastomère d'uréthane qui constitue la résine matricielle de celui-ci.

11. Siège de véhicule (10) selon la revendication 10, caractérisé en ce que ledit élastomère d'uréthane est un élastomère d'uréthane extrêmement souple et comprend des microbilles de résine dans un rapport de 1 à 5 pour cent par unité.

12. Siège de véhicule (10) selon la revendication 10 ou 11, caractérisé en ce que le rapport entre la constante d'élasticité en compression et la constante d'élasticité en détente dudit élément amortisseur de chocs n'est pas inférieur à 1,1 et en ce que le coefficient normal de stockage de celui-ci n'est pas supérieur à 0,22 N / mm$^2$.

13. Siège de véhicule (10) selon au moins l'une des revendications précédentes 1 à 12, caractérisé par une partie de dossier (23b) comprenant un élément amortisseur de chocs (32).

14. Siège de véhicule (10) selon au moins l'une des revendications précédentes 1 à 13, caractérisé par une plaque d'embase (24) comprenant des nervures s'étendant longitudinalement en saillie vers l'extérieur entourées par des retraits ouverts sur l'intérieur, tous deux étant disposés dans une zone située à proximité dudit élément amortisseur.

Fig.1

Fig.2

Fig. 3

EP 0 718 144 B1

Fig.4

Fig.5

(a)

HO = 90mm

$$0.125 < \frac{H1}{H2} < 1 \qquad 0.1 < \frac{H1}{H0} < 0.5$$

(b)

HO = 20mm

Fig.6

Fig.7

Fig.8

P5

upward (上方)

(P6)

D6

32

D5

Fig.9

Fig.10

(a)

60

62

forward

61

62

(b)

62

62

61

Fig.11

(a)

66a        66b        65

forward

66

(b)

A

A1

65

forward

66a        66b        66

Fig.12

Fig.13

Fig.14

65

69a
69
69b

Fig.15

65

70a

70

Fig.16

(a)

(b)

pressure
(圧力)

Fig.17

73

72c

72

Fig.18

73

72d

74

72

Fig.19

(a)

(b)

(c)

(d)

Fig.20

Fig.21

Fig.22

Fig.23

Fig.24

(a)

(b)

Fig. 24(c)

Fig. 24

(d)

(e)

SECT AA

(f)

Fig.25

Autograph

load cell

pressure jig

sample

Fig.26

pressure jig A

~210

~220

(A)

pressure jig B

~230

(B)

Fig.27

240

jig C

sample

250

Jig D

Fig.28.

Resinous Microballoon Mixing Ratio and Loss Modulus

Resinous microballoon mixing ratio

Fig.29

Bench Evaluation Value F for Fit Feeling and

Spring Constant Ratio p

Fig.30

Normal Storage Modulus and Physical Shock to Rider's Buttocks

Fig.31

Fig.32

Fig.33.

Fig.34

Fig.35